# EUROPÄISCHE PATENTSCHRIFT

(11) **EP 1 247 656 B1**
(45) Veröffentlichungstag und Bekanntmachung des Hinweises auf die Patenterteilung: **09.08.2006**
(21) Anmeldenummer: 01810338.2
(22) Anmeldetag: 04.04.2001
(51) Int. Cl.: B42C 19/00

(54) **Anlage für die Herstellung von Druckprodukten**
Device for producing printed products
Dispositif pour la fabrication des produits imprimées

(43) Veröffentlichungstag der Anmeldung: 09.10.2002
(73) Patentinhaber: GRAPHA-HOLDING AG, 6052 Hergiswil (CH)
(72) Erfinder: Jäggi, Reto, 5024 Küttigen AG (CH)

(56) Entgegenhaltungen:
- WO-A-94/01963
- DE-A- 4 306 098
- DE-A- 19 715 101
- US-A- 4 812 842

## Beschreibung

Die Erfindung betrifft eine Anlage für die Herstellung von Druckprodukten nach dem Oberbegriff des Anspruchs 1. Anlagen der genannten Art, wie beispielsweise Buchbindelinien, Buchfertigungsstrassen für das Einhängen von Buchblöcken in Buchdecken, Anlagen zur Herstellung von gehefteten Zeitschriften oder roschuren mittels Sammelheftern und Anlagen zur Produktion von versandbereiten Zeitungen in einem Versandraum, bestehen aus mehreren Bearbeitungsstationen aufweisende Maschinen, mit denen die Druckprodukte in einer Prozesskette bearbeitet werden. Bei einer Buchbindelinie sind diese Maschinen insbesondere eine Zusammentragmaschine, Überführungseinrichtung, ein Klebebinder, Abtransportsystem, Weiche, Trennsäge, Dreischneider, Zählstapler, Foliermaschine und Palettierer.

Für das Herstellen von klammergehefteten Zeitschriften werden Druckbogenzuführeinrichtungen, Sammelmaschinen mit Druckbogenanlegern als Bearbeitungsstationen, eine Heftmaschine und eine Schneidmaschine in Linie eingesetzt.

Die Zeitungsproduktion erfordert im Anschluss an die Druckmaschine die Druckerzeugnisse versandgerecht aufbereitende Maschinen mit Bearbeitungsstationen oder eine einer Druckmaschine nachgeschaltete Einsteckmaschine mit Anlegern, die Vorprodukte und/oder Beilagen von einer Abrollstation einem Hauptprodukt zuführen und das so gefertigte Druckerzeugnis an Stapelvorrichtungen, Adressier-, Folier- oder Umreifungsvorrichtungen weiterfördert.

Zum Optimieren der Maschinen und auch für Korrekturen müssen diese von geeigneten Personen bedient werden. Beispielsweise muss die Geschwindigkeit verändert oder es müssen Achsen mittels eines elektrischen Stellgliedes verstellt werden. Insbesondere müssen zum Optimieren oder zum Korrigieren Aktoren positiv oder negativ verstellt, wie zum Beispiel eine Achse auf einen Endanschlag gefahren, eine Achse initialisiert oder auf einen bestimmten Wert positioniert werden. Für solche Korrekturen und Optimierungsarbeiten sind die entsprechenden Maschinen jeweils mit mehreren Eingabevorrichtungen versehen, die zur Eingabe der Änderungen eine Tastatur und eine Anzeigevorrichtung zur Sichtbarmachung von Betriebszuständen und Fehlermeldungen besitzen. Soll an einer Bearbeitungsstation, beispielsweise einer Rückenfräse eine Korrektur vorgenommen werden, so begibt sich die für diese Arbeit berechtigte Bedienungsperson zu dieser Bearbeitungsstation und gibt an der dieser fest zugeordneten Eingabevorrichtung an die Steuerung entsprechende Korrekturbefehle ein. Über die Steuerung werden die elektrischen Stellglieder verstellt.

In der Praxis haben sich solche Anlagen an sich seit vielen Jahren bewährt. Komplexe Anlagen, wie beispielsweise Buchbindelinien, mit mehreren Bearbeitungsstationen, sind aber vergleichsweise aufwendig und es besteht seit langem das Bedürfnis, diese im Aufbau und in der Bedienung zu vereinfachen.

In der US 4 812 842 A ist eine Vorrichtung zur drahtlosen Uebertragung von Steuerbefehlen an die elektronische Maschinensteuerung einer Rotationsdruckmaschine beschrieben, die ein tragbares Eingabegerät mit einem Sender zur Uebertragung von Steuersignalen an einen mit einer Steuereinheit der Rotationsdruckmaschine verbundenen Empfänger aufweist.

Die DE 43 06 098 vermittelt eine Einrichtung zum Steuern einzelner Funktionseinheiten einer Druckmaschine, die eine transportable, an eine Funktionseinheit adaptier- und anschliessbare Bedienvorrichtung aufweist.

Durch die DE 197 15 101 A1 ist ein Verfahren zur Steuerung einer graphischen Maschine bekannt, mit dem zur Steuerung der Maschinenfunktionen ein Sprachsignal eines Bedieners aufgenommen, umgewandelt, drahtlos übertragen und nach einer Auswertung zur Bildung von entsprechenden Steuersignalen für Maschinenfunktionen benutzt werden.

Der Erfindung liegt die Aufgabe zugrunde, eine Anlage der genannten Art zu schaffen, die sich durch einen einfacheren und kostengünstigeren Aufbau auszeichnet und die trotzdem funktionssicher ist.

Die Aufgabe ist gemäss Anspruch 1 gelöst.

Bei der erfindungsgemässen Anlage können mit einem einzigen Eingabemittel die Bearbeitungsstationen einer oder mehrerer Maschinen für Einstellungen, Korrekturen, zur Optimierung, Fehlerquittierung, zu Start und Stopp lokal bedient werden. An den Maschinen sind keine fest installierten Bedieneinheiten mehr zwingend erforderlich. Dies bedeutet insbesondere bei Anlagen mit sehr vielen Bearbeitungsstationen eine wesentliche Kosteneinsparung, da die entsprechenden Bedieneinheiten weggelassen werden können. Die Erfindung ermöglicht somit, auch komplexe und aufwendige Anlagen, wie beispielsweise Buchbindelinien, mit einem einzigen Eingabemittel dezentral an den verschiedenen Bearbeitungsstationen zu korrigieren und zu optimieren.

Das Eingabemittel kann ein vergleichsweise einfaches Gerät, beispielsweise ein Mobiltelefon, ein PDA oder ein ähnliches Kommunikationsgerät sein, das zur Positionserkennung mit einem Codeträger ausgerüstet ist. Zur Positionserkennung kann jede zu bedienende Bearbeitungsstation mit einem Codeleser versehen werden, der das Gerät bzw. das Mobiltelefon in einem bestimmten Bereich der Umgebung erkennt und diese Erkennung einer Steuerung meldet. Möglich ist auch eine Ausführung, bei welcher das Eingabemittel einen Codeleser und die Bearbeitungsstationen jeweils mit wenigstens einem Codeträger versehen sind. Hierbei erfolgt die Lageerkennung durch das Eingabemittel über den an der Bearbeitungsstation vorgesehenen Codeträger, so dass das Eingabemittel seine Lage und Identität durch bekannte Uebertragungsmittel an die Steuervorrichtung transferiert. Die Positionserkennung ist aber auch mit anderen Mitteln, beispielsweise mit einem GPS möglich. Die Tastatur des Mobiltelefons sowie die Anzeige bilden die Schnittstelle. Durch Benutzung eines persönlichen Mobiltelefons mit einem persönlichen Codeträger kann die Bedienungsperson eindeutig identifiziert werden.

Die Handlungsberechtigung bezogen auf einzelne Bearbeitungsstationen und/oder Arten von Manipulationen kann dann besonders einfach geregelt werden, wenn gemäss einer Weiterbildung der Erfindung eine Datenbank vorgesehen ist, auf welcher die gewünschte Handlungsberechtigung des Bedieners bzw. der Bediener hinterlegt ist. Solche Handlungsberechtigungen können einfach geändert und überprüft werden.

Vorzugsweise ist das Eingabemittel gemäss einer Weiterbildung der Erfindung so ausgebildet, dass Korrekturen an einer nächstliegenden Bearbeitungsstation durchführbar sind. Die Eingabemittel können aber auch so ausgebildet sein, dass gemäss einer Weiterbildung der Erfindung Korrekturen an einer manuell angewählten, entfernteren Bearbeitungsstation durchführbar sind. Insbesondere bei grossen und sehr langen Anlagen kann die Bedienung damit wesentlich einfacher und schneller erfolgen.

Ausführungsbeispiele der Erfindung werden nachfolgend anhand der Zeichnung näher erläutert. Es zeigen:
- Fig. 1: schematisch einen Ausschnitt einer erfindungsgemässen Anlage,
- Fig. 2: schematisch das Zusammenwirken der Eingabemittel mit der Steuerung,
- Fig. 3: schematisch ein Eingabemittel und eine Anzeige mit einem Übersichtsbild mit den an einer Bearbeitungsstation aktivierbaren Funktionen,
- Fig. 4: eine weitere Ansicht gemäss Fig. 3,
- Fig. 5 und 6: weitere Ansichten der Anzeige und
- Fig. 7: einen Auszug aus einer Anlage gemäss einer Variante.

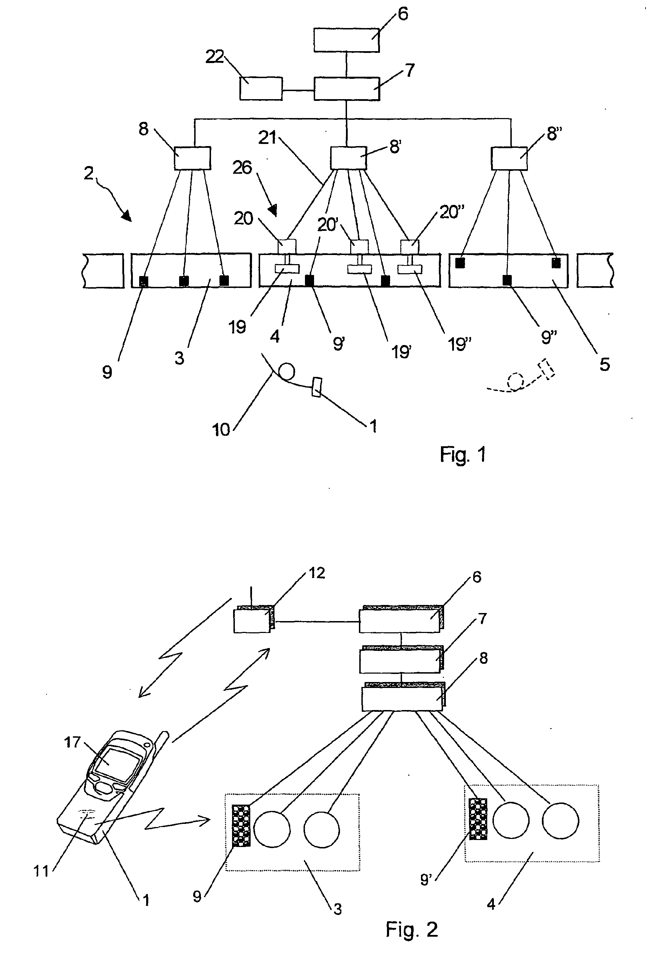

Die in Fig. 1 gezeigte Anlage 2 ist eine Buchbindelinie, die zur Herstellung eines hier nicht gezeigten Buches mehrere Maschinen 3, 4 und 5 aufweist, mit denen die Druckprodukte in Fig. 1 beispielsweise in einer Linie von links nach rechts bearbeitet werden. Solche Maschinen 3, 4 und 5 sind beispielsweise Zusammentragmaschinen, Überführungsmittel, Klebebinder, Schneidvorrichtungen und Foliermaschinen. Die Anlage 2 kann aber auch eine andere Produktelinie der druckverarbeitenden Industrie sein, beispielsweise kann diese eine Sammelheftanlage sein. Solche Anlagen sind dem Fachmann gut bekannt.

Anlagen der beschriebenen Art weisen üblicherweise eine rechnerunterstützte Steuervorrichtung auf.

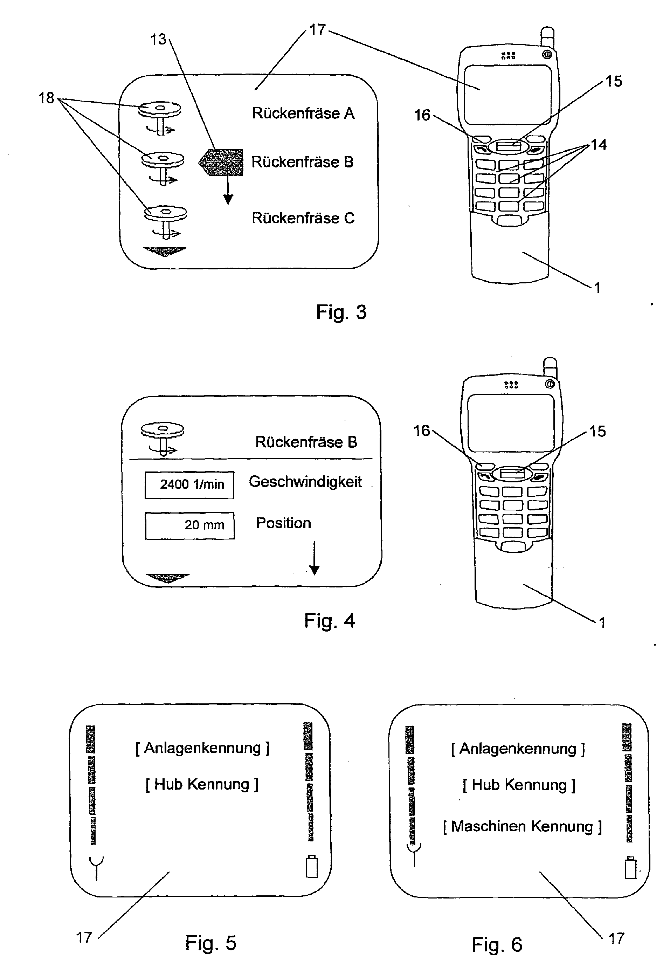

Die Maschine 4 weist beispielsweise eine Rückenfräse 19 auf, deren Position von einem Stellmotor 20 verstellbar ist. Die Steuerung der Stellmotoren 20 erfolgt mittels einer Maschinensteuerung 8', die mit der Maschine 4 über eine Signalleitung 21 verbunden ist. Die übrigen Maschinen 3 und 5 sind jeweils ebenfalls über entsprechend zugeordnete Maschinensteuerungen 8 und 8'' gesteuert. Eine Korrektur der Geschwindigkeit der Rückenfräse 19 erfolgt mit einem Eingabemittel 1, das in Fig. 1 von einer Bedienungsperson 10 benutzt wird. Dieses Eingabemittel 1 ist frei beweglich und vorzugsweise als handliches Gerät ausgebildet. Das Eingabemittel ist beispielsweise das in Fig. 2 angedeutete Mobiltelefon. Dieses ist zur Signalübermittlung mit einer Telefonzentrale 6 verbindbar. Diese Telefonzentrale 6 ist vorzugsweise die hauseigene Telefonzentrale. Es ist hier aber auch eine andere geeignete drahtlose Signalübermittlung, beispielsweise mittels Infrarot möglich.

Das Eingabemittel 1 ist mit einem Codeträger 11 und jede bedienbare Maschine 3, 4 und 5 ist mit wenigstens einem Codeleser 9 versehen. Nähert sich die Bedienungsperson 10 mit dem Eingabemittel 1 beispielsweise der Bearbeitungsstation 4, so identifiziert der Codeleser 9' die Präsenz des Eingabemittels 1 und meldet die Kontaktaufnahme an die Maschinensteuerung 8'. Die Maschinensteuerung 8' übermittelt wiederum über die Liniensteuerung 7 der Telefonzentrale 6 notwendige Informationen zur Ansteuerung einer Anzeige 17, beispielsweise einer Flüssigkristallanzeige, des Eingabemittels 1. Die Maschinensteuerung 8' sendet nun über die Liniensteuerung 7 eine Bedienmaske einer aktivierten Bedienstelle an die Telefonzentrale 6, welche die Daten auf das Eingabemittel 1 überträgt. Die Übertragung erfolgt über eine Sendestation 12.

Die Fig. 3 zeigt links eine geeignete Bedienmaske für die Bedienung der Maschine 4. Auf der Anzeige 17 sind mit bildlichen Darstellungen 18 drei Rückenfräsen A, B und C, der Maschine 4 dargestellt. Durch Betätigen einer Taste 16 -oder ein Touchscreen- kann ein Cursor 13 zur gewünschten Rückenfräse A, B oder C bewegt werden. Mit einer Taste 15 kann die Wahl der entsprechenden Rückenfräse A, B oder C bestätigt werden. Nach der erfolgten Wahl erscheint die in Fig. 4 gezeigte Anzeige mit Details der gewählten Funktion. In diesem Fall sind dies die Funktionen Geschwindigkeit und Position. Mittels Tasten 14 können Werte eingegeben werden. Über eine geeignete Taste 16 können Slidebars verschoben und damit die gewünschte Geschwindigkeit bzw. Position beispielsweise einer Achse eingestellt werden. Falls gewünscht, können beide Positionen oder wahlweise die eine oder andere eingestellt werden. Über eine geeignete Taste kann die Einstellung bestätigt und die Korrektur vorgenommen werden. Die Korrektur erfolgt in diesem Fall über die Maschinensteuerung 8' am Stellmotor 20. Von der in Fig. 1 gezeigten Position kann nun insbesondere lediglich die Maschine 4 korrigiert bzw. optimiert werden.

Die Fig. 5 zeigt einen Normalzustand der Anzeige 17, mit der Angabe der Telefonanlage und der Nennung der Relaisstation (Hubkennung), die Feldstärke und den Batterieladezustand. Die Fig. 6 zeigt den Zustand der Anzeige 17 bei einer Annäherung an eine der Maschinen 3, 4 oder 5.

Soll beispielsweise die Maschine 5 optimiert werden, so begibt sich die Bedienungsperson 10 in Fig. 1 nach rechts in die gestrichelt angedeutete Stellung. Der Codeleser 9'' identifiziert die Präsenz des Eingabemittels 1 und meldet die Kontaktaufnahme an die Maschinensteuerung 8''. Das weitere erfolgt wie oben am Beispiel der Maschine 4 erläutert. Die Bedienmaske, die auf der Anzeige 17 erscheint, ist entsprechend der Maschine 5 ausgestaltet.

Für die Erfindung ist somit wesentlich, dass der Ort oder die relative Lage des Eingabemittels 1 zur Maschine 3, 4 oder 5 automatisch erkannt wird. Im gezeigten Ausführungsbeispiel erfolgt dies durch die Codeleser 9, 9' und 9' ' sowie den Codeträger 11. Es sind hier jedoch auch andere Mittel zur Positionserkennung denkbar, beispielsweise kann dies über GPS (Global Positioning System, resp. Positionierungssystem) erfolgen.

Die Bedienungsperson 10 kann durch die Benutzung eines persönlichen Eingabemittels 1 mit einem persönlichen Codeträger 11 eindeutig identifiziert werden. Dazu wird ihre Handlungsberechtigung, bezogen auf einzelne der Maschine 3, 4 und 5 auf einer zentralen Datenbank 22 durch einen System-administrator hinterlegt. Die Handlungsberechtigung kann auch die Arten von Manipulationen betreffen. Beispielsweise kann die Bedienungsperson 10 lediglich zum Optimieren der Maschine 4 und auf dieser wiederum zur Optimierung einer Funktion beispielsweise der Geschwindigkeit berechtigt sein. Codeleser 9 sowie Codeträger 11 sind in geeigneten Ausführungen gut bekannt. Der Codeträger 11 kann an der Aussenseite des Eingabemittels 1 oder beispielsweise an einem hier nicht gezeigten auswechselbaren Teil des Eingabemittels angeordnet sein.

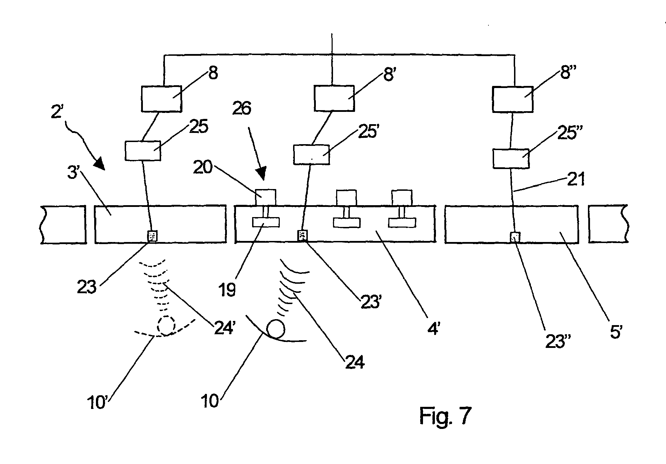

Bei der erfindungsgemässen Anlage 2 sind somit folgende Funktionen vorgesehen:
1. Durch die Tasten 14, 15 und 16 und die Anzeige 17 steht der Bedienungsperson 10 eine Bedienerschnittstelle zur Verfügung.
2. Der Standort der Bedienungsperson 10 an einer Maschine 3, 4 und 5 wird genau erkannt, sodass ein Bedienerdialog selektiv auf eine der Bearbeitungsstationen 26 innerhalb der Maschinen 3, 4 oder 5 ablaufen kann. Die Erkennung des Standortes erfolgt beispielsweise anhand der Codeleser 9 und des Codeträgers 11. Andere Erkennungsmittel, wie beispielsweise ein GPS sind aber durchaus denkbar.
3. Die Bedienungsperson 10 wird eindeutig identifiziert und ihre Handlungsberechtigung bezogen auf einzelne Bearbeitungsstationen und/oder Arten von Manipulationen ist überprüfbar. Dies erfolgt vorzugsweise ebenfalls über die Codeleser 9, 9' bzw. 9'' und den Codeträger 11 sowie die zentrale Datenbank 22. Auch hier sind aber andere Mittel denkbar.
   Beispielsweise kann eine Identifikation über eine Spracherkennung erfolgen. Geeignete Geräte zur Spracherkennung sind an sich bekannt. Auch die Bedienung kann akustisch über die Sprache erfolgen. Dazu sind an den Maschinen 3, 4 und 5 Mikrofone integriert, wie dies weiter unten anhand der Figur 7 erläutert ist. Das Eingabemittel 1 ist die Bedienungsperson 10 bzw. der erzeugte Schall selber. Die Positionserkennung ist beispielsweise durch entsprechende Richtung der Mikrofone möglich. Befindet sich beispielsweise die Bedienungsperson 10 in der in Fig. 7 gezeigten Position, so werden von dem in der Maschine 4' installierten Mikrofon 23' die Schallwellen der Bedienungsperson 10 wesentlich stärker empfangen als von den entsprechenden Mikrofonen 23 und 23'' der Maschinen 3' und 5'. Dies ist in der Fig. 7 schematisch dargestellt.

Die in Fig. 7 gezeigte Anlage 2' weist, wie oben erläutert, Maschinen 3', 4' und 5' auf, die insbesondere Bearbeitungsstationen einer Buchbindelinie enthalten. Zur Steuerung der Maschinen 3' 4' und 5' sind hier ebenfalls Maschinensteuerungen 8, 8' und 8'' vorgesehen. Jede dieser Maschinen 3', 4' und 5' ist mit einem Mikrofon 23, 23' bzw. 23'' versehen. Soll beispielsweise eine Bearbeitungsstation 3' innerhalb der Maschine mit einer Korrektur versehen werden, so geht die Bedienungsperson 10 in die in Fig. 7 mit ausgezogenen Linien gezeigte Stellung und übermittelt der Maschine 4' die Korrekturwerte sprachlich, d.h. über akustische Wellen 24 dem Mikrofon 23'. Das Mikrofon 23' ist so ausgebildet, dass es lediglich Schallwellen 24' in einem bestimmtem Umfangsbereich der Maschine 4' aufnimmt. Dies gilt ebenfalls für die Mikrofone 23' und 23''. Befindet sich beispielsweise die Bedienungsperson 10 in der in Fig. 7 mit gestrichelten Linien gezeigten Stellung, so werden die Schallwellen 24' lediglich vom Mikrofon 23' der Maschine 3' registriert und in elektrische Signale für die Steuervorrichtung 8' umgewandelt. Die Mikrofone 23, 23' und 23'' bilden somit ein Ortungssystem. Die vom Mikrofon 23, 23' bzw. 23'' aufgenommenen Steuerbefehle werden jeweils mit Spracherkennungsmitteln 25 überprüft. Die Signale werden ignoriert, wenn sie nicht zu einer berechtigten Bedienungsperson 10 zugeordnet werden können.

Denkbar ist hier auch eine Hintergrundausblendung mittels Triangulation. Mit den Spracherkennungsmitteln 25 ist somit eine Identifikation gewährleistet. Korrekturen können somit nur von berechtigten Bedienungspersonen 10 eingegeben werden. Mittel zur Spracherkennung sind dem Fachmann an sich bekannt und brauchen hier nicht näher erläutert zu werden. Im Ausführungsbeispiel gemäss Fig. 7 sind die Schallwellen 24' die oben erläuterten Eingabemittel.

## Patentansprüche

1. Anlage für die Herstellung von bedruckten Produktenwie Zeitschriften, Broschuren oder, Büchern, mit mehrere Bearbeitungsstationen (26) aufweisenden Maschinen (3, 4, 5), die eine Produktelinie, insbesondere Fertigungslinie bilden, mit einer Steuervorrichtung (7, 8) zur Steuerung der Bearbeitungsstationen (26) einer Maschine (3, 4, 5) und mit wenigstens einem frei beweglichen Eingabemittel (1, 24) zum Bedienen der Bearbeitungsstationen (26) durch die Steuervorrichtung (7, 8), **dadurch gekennzeichnet, dass**
die relative Lage des Eingabemittels (1, 24) zu den Bearbeitungsstationen (26) durch Annäherung des Eingabemittels (1, 24) an eine Bearbeitungsstation (26) mittels drahtloser Verbindung zwischen Eingabemittel und einer Bearbeitungsstation (26) resp. der Steuervorrichtung (7, 8) automatisch erkennbar ist.

2. Anlage nach Anspruch 1, **dadurch gekennzeichnet, dass** Mittel (9, 11, 25) zur Identifikation einer Bedienungsperson (10) vorgesehen sind.

3. Anlage nach einem der Ansprüche 1 und 2, **dadurch gekennzeichnet, dass** mit dem Eingabemittel (1, 24) Korrekturen an der nächstliegenden Bearbeitungsstation (26) durchführbar sind.

4. Anlage nach einem der Ansprüche 1 bis, 3, **dadurch gekennzeichnet, dass** die Lage des Eingabemittels (1) mittels einem GPS bestimmt wird.

5. Anlage nach einem der Ansprüche 1 bis 4, **dadurch gekennzeichnet, dass** die Lage des Eingabemittels (1) mit einem lokalen Positionierungssystem ermittelt wird.

6. Anlage nach einem der Ansprüche 1 bis 5, **dadurch gekennzeichnet, dass** die Bearbeitungsstationen (26) jeweils einen Codeleser (9) oder Codeträger (11) und das Eingabemittel (1) einen Codeträger (11) oder Codeleser (9) aufweisen.

7. Anlage nach einem der Ansprüche 1 bis 6, **dadurch gekennzeichnet, dass** das Eingabemittel (1) eine Eingabetastatur (14, 15, 16) aufweist.

8. Anlage nach einem der Ansprüche 1 bis 7, **dadurch gekennzeichnet, dass** Mittel zur Spracheingabe (23) und Spracherkennung (25) vorgesehen sind.

9. Anlage nach Anspruche 8, **dadurch gekennzeichnet, dass** die Spracheingabe (23) mehrere an den Maschinen (3', 4', 5') angeordnete Mikrofone (23) aufweist.

10. Anlage nach einem der Ansprüche 1 bis 9, **dadurch gekennzeichnet, dass** die Steuerung (7, 8) über eine Freisprechgarnitur (23) bedienbar ist.

11. Anlage nach einem der Ansprüche 1 bis 7, **dadurch gekennzeichnet, dass** das Eingabemittel (1) ein Mobiltelefon ist.

12. Anlage nach einem der Ansprüche 1 bis 11, **dadurch gekennzeichnet, dass** eine elektronische Datenbank (22) vorgesehen ist, auf der eine Handlungsberechtigung des Bedieners bzw. der Bediener hinterlegt ist.

13. Anlage nach Anspruch 12, **dadurch gekennzeichnet, dass** die Handlungsberechtigung auf einzelne Bearbeitungsstationen (26) und/oder Arten von Manipulationen spezifiziert ist.

14. Anlage nach Anspruch 13, **dadurch gekennzeichnet, dass** eine Bearbeitungsstation (26) wenigstens ein Stellglied (20) aufweist und dass über das Stellglied mit dem genannten Eingabemittel (1, 24) Einstellungen und Aenderungen der Geschwindigkeit und/oder Position einer Bearbeitungsstation (26) durchführbar sind.

## Claims

1. Equipment for producing printed products, such as periodicals, brochures or books, said equipment comprising machines (3, 4, 5) having a plurality of processing stations (26) and forming a product line, in particular a production line, and said equipment also comprising control apparatus (7, 8), for controlling the processing stations (26) of a machine (3, 4, 5), and at least one freely movable input means (1, 24) for operating the processing stations (26) via the control apparatus (7, 8), **characterized in that** the location of the input means (1, 24) relative to the processing stations (26) can be detected automatically by means of wireless communication between input means and a processing station (26) or, more specifically, between input means and the control apparatus (7, 8), upon bringing of the input means (1, 24) close to a processing station (26).

2. Equipment according to Claim 1, **characterized in that** means (9, 11, 25) are provided for the purpose of identifying an operator (10).

3. Equipment according to one of Claims 1 or 2, **characterized in that** corrections or adjustments can be carried out at the nearest processing station (26) via the input means (1, 24).

4. Equipment according to one of Claims 1 to 3, **characterized in that** the location of the input means (1) is determined by means of a GPS.

5. Equipment according to one of Claims 1 to 4, **characterized in that** the location of the input means (1) is determined by means of a local positioning system.

6. Equipment according to one of Claims 1 to 5, **characterized in that** the processing stations (26) each have a code reader (9) or code carrier (11) and the input means (1) has a code carrier (11) or code reader (9).

7. Equipment according to one of Claims 1 to 6, **characterized in that** the input means (1) has a keypad (14, 15, 16) for inputting data.

8. Equipment according to one of Claims 1 to 7, **characterized in that** means are provided for voice input (23) and for voice recognition (25).

9. Equipment according to Claim 8, **characterized in that** the voice input means (23) comprises a plurality of microphones (23) disposed on the machines (3', 4', 5').

10. Equipment according to one of Claims 1 to 9, **characterized in that** the control apparatus (7, 8) can be operated by way of a hands-free telephone set (23).

11. Equipment according to one of Claims 1 to 7, **characterized in that** the input means (1) is a mobile telephone.

12. Equipment according to one of Claims 1 to 11, **characterized in that** an electronic data bank (22) is provided on which authorization in respect of the operator or operators is stored.

13. Equipment according to Claim 12, **characterized in that** the authorization is stipulated for particular processing stations (26) and/or types of manipulation.

14. Equipment according to Claim 13, **characterized in that** a processing station (26) has at least one regulating unit (20), and **in that** adjustments and alterations of the speed and/or position of a processing station (26) can be carried out by way of said regulating unit using said input means (1, 24).

## Revendications

1. Installation pour la fabrication de produits imprimés tels que magazines, brochures ou livres, avec des machines (3, 4, 5) présentant plusieurs stations de travail (26) qui forment une ligne de produits, en particulier une ligne de fabrication, avec un dispositif de commande (7, 8) pour la commande des stations de travail (26) d'une machine (3, 4, 5) et avec au moins un moyen d'entrée librement mobile (1, 24) pour la conduite des stations de travail (26) par le dispositif de commande (7, 8), **caractérisée par le fait**
**que** la position relative du moyen d'entrée (1, 24) par rapport aux stations de travail (26) est reconnaissable automatiquement par approche du moyen d'entrée (1, 24) d'une station de travail (26) au moyen d'une liaison sans fil entre le moyen d'entrée et une station de travail (26) ou le dispositif de commande (7, 8).

2. Installation selon la revendication 1, **caractérisée par le fait qu'**il est prévu des moyens (9, 11, 25) pour l'identification d'un opérateur (10).

3. Installation selon l'une des revendications 1 et 2, **caractérisée par le fait qu'**il est possible d'effectuer des corrections sur la station de travail (26) la plus proche avec le moyen d'entrée (1, 24).

4. Installation selon l'une des revendications 1 à 3, **caractérisée par le fait que** la position du moyen d'entrée (1) est déterminée au moyen d'un GPS.

5. Installation selon l'une des revendications 1 à 4, **caractérisée par le fait que** la position du moyen d'entrée (1) est déterminée au moyen d'un système de positionnement local.

6. Installation selon l'une des revendications 1 à 5, **caractérisée par le fait que** les stations de travail (26) présentent chaque fois un lecteur de code (9) ou un support de code (11) et le moyen d'entrée (1) un support de code (11) ou un lecteur de code (9).

7. Installation selon l'une des revendications 1 à 6, **caractérisée par le fait que** le moyen d'entrée (1) présente un clavier d'entrée (14, 15, 16).

8. Installation selon l'une des revendications 1 à 7, **caractérisée par le fait qu'**il est prévu des moyens d'entrée vocale (23) et de reconnaissance vocale (25).

9. Installation selon la revendication 8, **caractérisée par le fait que** l'entrée vocale (23) présente plusieurs microphones (23) disposés sur les machines (3', 4', 5').

10. Installation selon l'une des revendications 1 à 9, **caractérisée par le fait que** la commande (7, 8) peut être conduite par l'intermédiaire d'un kit ou ensemble mains libres (23).

11. Installation selon l'une des revendications 1 à 7, **caractérisée par le fait que** le moyen d'entrée (1) est un téléphone mobile.

12. Installation selon l'une des revendications 1 à 11, **caractérisée par le fait qu'**il est prévu une base de données électronique (22) dans laquelle une autorisation d'action de l'opérateur ou des opérateurs est enregistrée.

13. Installation selon la revendication 12, **caractérisée par le fait que** l'autorisation d'action est spécifiée sur certaines stations de travail (26) et/ou types de manipulations.

14. Installation selon la revendication 13, **caractérisée par le fait qu'**une station de travail (26) présente au moins un actionneur (20) et que l'actionneur permet d'effectuer des réglages et modifications de la vitesse et/ou de la position d'une station de travail (26) avec le moyen d'entrée (1, 24) mentionné.
